# EUROPÄISCHE PATENTSCHRIFT

(11) **EP 2 522 486 B1**
(45) Veröffentlichungstag und Bekanntmachung des Hinweises auf die Patenterteilung: **18.09.2013**
(21) Anmeldenummer: 11003824.7
(22) Anmeldetag: 10.05.2011
(51) Int. Cl.: B29C 51/26, B29C 31/00, B29C 33/30

(54) **Werkzeugwechseleinrichtung**
Tool swapping device
Dispositif de changement d'outil

(43) Veröffentlichungstag der Anmeldung: 14.11.2012
(73) Patentinhaber: Multivac Sepp Haggenmüller GmbH & Co. KG, 87787 Wolfertschwenden (DE)
(72) Erfinder: Ehrmann, Elmar, 87730 Bad Grönenbach (DE)
(74) Vertreter: Grünecker, Kinkeldey, Stockmair & Schwanhäusser

(56) Entgegenhaltungen:
- EP-A1- 0 467 069
- EP-A1- 1 234 765
- EP-A1- 1 520 682
- DE-A1- 19 738 954

## Beschreibung

Die Erfindung bezieht sich auf eine Werkzeugwechseleinrichtung einer Tiefziehverpackungsmaschine gemäß dem Oberbegriff des Anspruchs 1 und ein Verfahren nach Anspruch 8 zum Wechseln eines Werkzeugeinschubs.

Aus der EP 1 234 765 B1 ist ein Werkzeugwechselsystem bekannt, bei dem Werkzeugteile in Produktionsrichtung automatisch über eine Übergabeablage in eine Parkposition gewechselt werden, ohne dass dabei die Folienbahn in diesem Bereich entfernt werden muss. Dabei bleiben alle Werkzeug in oder an der Maschine. Es ist ein hoher Platzbedarf für die in der Parkposition befindlichen Werkzeuge und für die Übergabeablage vorzusehen. Der Platzbedarf beschränkt auch die Anzahl der möglichen Werkzeuge in der Parkposition.

Aus der EP 0 467 069 A1 ist eine Tiefziehverpackungsmaschine bekannt, bei der ein Formwerkzeugunterteil seitlich aus der Tiefziehverpackungsmaschine herausziehbar ist. Dies findet ohne Beeinflussung der Folienbahn statt.

Werkzeugoberteile werden bei Tiefziehverpackungsmaschinen zu einem Austausch üblicherweise nach oben angehoben und gewechselt. Zu wechselnde Werkzeugeinschübe in Werkzeugoberteilen, beispielsweise an Form- oder Siegelstationen, die sich mit einem Teil zwischen den Transportketten bzw. den Kettenführungen befinden, werden nach oben als Einheit mit dem Werkzeugoberteil angehoben oder in Produktionsrichtung oberhalb der Folienbahn aus den Werkzeugoberteilen herausgezogen und gewechselt.

Die Aufgabe der Erfindung ist es, eine Möglichkeit für einen seitlichen Wechsel von einem Werkzeugeinschub eines Werkzeugoberteils in einer Tiefziehverpackungsmaschine zur Verfügung zu stellen.

Diese Aufgabe wird gelöst durch eine Werkzeugwechseleinrichtung mit den Merkmalen des Anspruchs 1 bzw. ein Verfahren nach Anspruch 8. Vorteilhafte Weiterbildungen der Erfindung sind in den Unteransprüchen angegeben.

Die erfindungsgemäße Werkzeugwechseleinrichtung für einen Werkzeugeinschub einer Arbeitsstation einer Tiefziehverpackungsmaschine, die beidseitig eines bahnförmigen

Materials eine Kettenführung zum Transportieren des bahnförmigen Materials durch die Arbeitsstation vorsieht, zeichnet sich durch eine relativ zum Werkzeugeinschub vertikal bewegbare Kettenführung aus, um den Werkzeugeinschub seitlich gegenüber der Produktionsrichtung verschieben zu können. Für Werkzeugeinschübe, die oberhalb der Folienbahn vorgesehen sind, wird die Kettenführung soweit nach unten abgesenkt, dass die Kettenführung keine Störkontur gegenüber einer Bewegung des Werkzeugeinschubs über die Kettenführung hinweg darstellt. Bei Werkzeugeinschüben, die sich unterhalb der Folienbahn befinden, wird die Kettenführung soweit nach oben angehoben, dass auch hier die Bewegung des Werkzeugeinschubs nicht durch die Kettenführung behindert wird. Zur Ausführung der Wechselfunktion ist es ausreichend, wenn die Bewegbarkeit der Kettenführung in dem Bereich vorgesehen ist, der für den Werkzeugeinschub benötigt wird.

Vorzugsweise ist die Kettenführung relativ zum Werkzeugeinschub in eine Wechselposition und in eine Arbeitsposition bewegbar, wobei die Wechselposition eine gegenüber der entlang der Tiefziehverpackungsmaschine zu transportierenden Folienbahn abgesenkte bzw. angehobene Position darstellt. Die Kettenführung befindet sich in der Arbeitsposition zum Transportieren der Folienbahn, wobei sich die Folienbahn im Bereich der Formstation auf gleicher Höhe wie in den Bereichen der Einlegestrecke, der Siegelstation und der Schneidstationen entlang der Produktionsrichtung befindet.

Es ist besonders vorteilhaft, wenn die Kettenführung in ihrer Bewegung an ein Werkzeugoberteil oder an ein Werkzeugunterteil gekoppelt ist. Somit sind keine weiteren Antriebssysteme notwendig und es wird eine einfache und kostengünstige Konstruktion ermöglicht.

Im Fall einer separat von einem Werkzeugunterteil oder Werkzeugoberteil der Arbeitsstation angetriebenen Kettenführung ist diese vorzugsweise mittels wenigstens eines Aktuators, beispielsweise eines Pneumatikzylinders oder eines Servomotors, bewegbar, um unabhängig von anderen, zum Teil auch parallel ablaufenden Bewegungen einer Arbeitsstation bewegbar zu sein. Somit können beim Wechsel von Werkzeugen oberhalb und unterhalb der Folienbahn innerhalb einer Arbeitsstation die Werkzeuge in die jeweils für sich vorteilhafteste Wechselposition gebracht werden.

Vorzugsweise ist der Werkzeugeinschub eine Heizplatte, wenn die Arbeitsstation eine Formstation ist, oder der Werkzeugeinschub ist eine Siegelplatte, wenn die Arbeitsstation eine Siegelstation ist. Somit kann ein den Werkzeugeinschub aufnehmender Werkzeugträger fest am Maschinenrahmen montiert sein und der beispielsweise formatabhängige Werkzeugeinschub zum Austausch oder zu Reinigungszwecken einfach und ergonomisch angepasst aus der Tiefziehverpackungsmaschine seitlich entnommen werden.

Vorzugsweise steht der Werkzeugeinschub mit dem Werkzeugträger bzw. einer Kühlplatte der Formstation während des Betriebs der Formstation in Kontakt, um einen als Heizplatte ausgeführten Werkzeugeinschub dauerhaft zu kühlen. Dabei ist der Kühlkreislauf im fest am Maschinenrahmen angebrachten Werkzeugträger der Formstation vorgesehen und ein Auslassen des Kühlwassers vor dem Herausziehen des Werkzeugeinschubs kann entfallen, was zu einer Verkürzung der Wechselzeit führt.

Vorzugsweise ist eine Tiefziehverpackungsmaschine mit einer erfindungsgemäßen Werkzeugwechseleinrichtung ausgerüstet, um den Wechsel eines Werkzeugeinschubs zu erleichtern und die dafür benötigte Zeit zu verkürzen.

Das erfindungsgemäße Verfahren zum Betrieb einer Werkzeugwechseleinrichtung einer Arbeitsstation in einer Tiefziehverpackungsmaschine sieht eine Kettenführung zum Transportieren eines bahnförmigen Materials durch die Arbeitsstation vor und die Kettenführung wird wenigstens im Bereich der Arbeitsstation relativ zu einem Werkzeugeinschub in eine Wechselposition vertikal bewegt, um den Werkzeugeinschub gegenüber der Produktionsrichtung seitlich zum Wechseln zu verschieben. Dies ermöglicht einen einfachen und schnellen Wechsel des Werkzeugeinschubs seitlich aus der Tiefziehverpackungsmaschine heraus, ohne dass die Folienbahn im Bereich der Arbeitsstation entfernt werden muss und ohne dass mechanische Umbauten vorgenommen werden müssen.

Bevorzugt erfolgt die Bewegung der Kettenführung in die Wechselposition mit oder nach dem Öffnen der jeweiligen Arbeitsstation, wobei beim Öffnen der Arbeitsstation ein Werkzeug, das sich an der einem Produkt abgewandten Seite des bahnförmigen Materials befindet, relativ vom Werkzeugeinschub, der sich auf der einem Produkt zugewandten Seite des bahnförmigen Materials befindet, wegbewegt wird.

Vorzugsweise erfolgt die Bewegung der Kettenführung in die Arbeitsposition vor oder mit dem Schließen der jeweiligen Arbeitsstation, wobei beim Schließen der Arbeitsstation ein Werkzeug, das sich an der einem Produkt abgewandten Seite des bahnförmigen Materials befindet, relativ zum Werkzeugeinschub, der sich auf der einem Produkt zugewandten Seite des bahnförmigen Materials befindet, hinbewegt wird.

In einer besonders vorteilhaften Ausführung wird die Kettenführung durch ein Werkzeugoberteil oder ein Werkzeugunterteil der jeweiligen Arbeitsstation bewegt. Somit wird kein weiterer Antrieb für diese Bewegung benötigt.

Alternativ wird die Bewegung der Kettenführung mittels eines Aktuators, vorzugsweise eines Pneumatikzylinders oder eines Servomotors, ausgeführt.

Die Bewegung der Kettenführung erfolgt bevorzugt, während das bahnförmige Material stillsteht, um eine besondere Beanspruchung an die Kettenführung und an das bahnförmige Material zu vermeiden.

Vorzugsweise ist die Arbeitsstation eine Formstation oder eine Siegelstation, wobei diese Werkzugeinschübe wie Heizplatte oder Siegelplatte aufweisen.

Bevorzugt wird der Werkzeugeinschub mittels einer Kühlplatte der Formstation indirekt gekühlt, indem der Werkzeugeinschub und die Kühlplatte der Formstation in flächigen Kontakt gebracht werden und die aktive Kühlung mittels eines Kühlmittelkreislaufs nur in der nicht bewegbaren Kühlplatte vorhanden ist. Weder ein Trennen des Werkzeugeinschubs vom Kühlwasserzulauf und Kühlwasserablauf noch ein Auslassen des Wassers aus dem Inneren des Werkzeugeinschubs sind notwendig. Dies führt zu einer weiteren Vereinfachung des Werkzeugwechsels.

Zweckmäßig ist es, die Energieleitungen beispielsweise für Strom, Druckluft oder Vakuum mit Steckverbindungen zwischen dem Werkzeugeinschub und dem Werkzeugträger vorzusehen, die automatisch beim Herausziehen des Werkzeugeinschubs gelöst und beim Einschieben des Werkzeugeinschubs verbunden werden. Damit entfallen manuelle Tätigkeiten zum Abklemmen oder Abstecken der einzelnen Leitungsverbindungen und die Wechselzeit wird verkürzt.

Bevorzugt wird der Werkzeugeinschub automatisch mittels einer Steuerung zum Herausnehmen aus der Arbeitsstation entriegelt und/oder automatisch nach dem Einschieben in die Arbeitsstation verriegelt. Somit wird die exakte und wiederholbare Position des Werkzeugeinschubs in der Arbeitsstation sichergestellt und in Verbindung mit einer optionalen Sensorik kann ein Maschinenstart entsprechend freigegeben oder gesperrt werden.

Im Folgenden wird ein vorteilhaftes Ausführungsbeispiel der Erfindung anhand einer Zeichnung näher erläutert.

Im Einzelnen zeigen:
Figur 1 eine perspektivische Ansicht einer Tiefziehverpackungsmaschine mit geöffneten Arbeitsstationen,
Figur 2 eine Schnittansicht durch die Formstation in Produktionsrichtung mit einer erfindungsgemäßen Werkzeugwechseleinrichtung in einer geschlossenen Stellung,
Figur 3 eine Schnittansicht durch die Formstation in Produktionsrichtung in einer geöffneten Stellung und mit angehobener Kettenführung,
Figur 4 wie Figur 3 mit seitlich herausbewegtem Werkzeugeinschub.

Gleiche Komponenten sind in den Figuren durchgängig mit gleichen Bezugszeichen versehen.

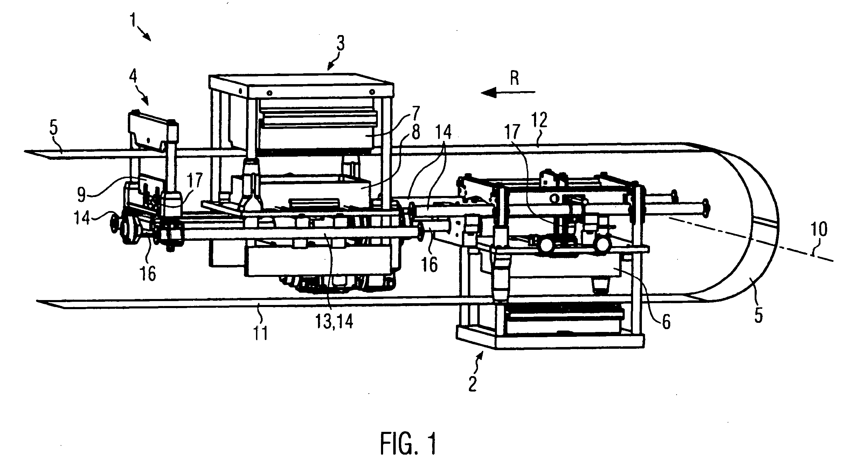

Figur 1 zeigt ein Ausführungsbeispiel einer Tiefziehverpackungsmaschine 1 in einer perspektivischen Ansicht.

Die Tiefziehverpackungsmaschine 1 verfügt über (mindestens) drei Arbeitsstationen, nämlich eine Formstation 2, eine Evakuier- und Siegelstation 3 und eine Trennstation 4. Alle diese Arbeitsstationen 2, 3, 4 wirken auf ein bahnförmiges Material 5 ein, bei dem es sich um eine Kunststofffolienbahn handelt. Die Formstation 2 verfügt zu diesem Zweck über ein Formwerkzeug 6. Bei einem Stillstand des bahnförmiges Materials 5 während des intermittierenden Betriebs der Tiefziehverpackungsmaschine 1 wird das Formwerkzeug 6 senkrecht zur Ebene des bahnförmigen Materials 5 bewegt, um in dem bahnförmigen Material 5 Verpackungsmulden tiefzuziehen.

Die Siegelstation 3 verfügt über ein Siegelwerkzeugoberteil 7 und ein Siegelwerkzeugunterteil 8. Durch die Bewegung des Siegelwerkzeugoberteils 7 und/oder des Siegelwerkzeugunterteils 8 aufeinander zu kann zwischen den beiden Werkzeugteilen 7, 8 eine geschlossene Siegelkammer gebildet werden, in der die zuvor mit einem Produkt befüllte Verpackungsmulde im bahnförmigen Material 5 mit einer nicht dargestellten Deckelfolie versiegelt und somit verschlossen werden kann. Denkbar ist es, die Siegelkammer zwischen den beiden Werkzeugteilen 7, 8 und damit die Verpackungsmulde vor dem Versiegeln zu evakuieren und/oder mit einem Austauschgas zu begasen. Nach dem Siegeln werden das Siegelwerkzeugoberteil 7 und das Siegelwerkzeugunterteil 8 wieder voneinander entfernt, um die Verpackungsmulde freizugeben, und den Weitertransport des bahnförmigen Materials 5 zu gestatten.

Bei der Trennstation 4 handelt es sich im vorliegenden Ausführungsbeispiel um eine Quertrenneinrichtung, in der als Werkzeugteil ein Trennmesser 9 vorgesehen ist. Dieses Trennmesser 9 kann in vertikaler Richtung, d.h. senkrecht zur Ebene des bahnförmigen Materials 5, bewegt werden, um das bahnförmige Material 5 zu durchtrennen.

Die Tiefziehverpackungsmaschine 1 definiert eine Produktionsrichtung R, in der das bahnförmige Material 5 durch zumindest einige der Arbeitsstationen transportiert wird, im vorliegenden Ausführungsbeispiel durch die Siegelstation 3 und die Trennstation 4. In der Formstation 2 wird das Verpackungsmaterial 5 entgegen dieser Produktionsrichtung R transportiert, bevor es um eine virtuelle, horizontale Achse 10 umgelenkt und auf diese Weise von einer ersten Transportebene 11 in eine zweite Transportebene 12 gebracht wird.

Die Tiefziehverpackungsmaschine 1 verfügt über einen Rahmen 13, der horizontal zwischen den beiden Transportebenen 11, 12 angeordnet ist. Der Rahmen 13 umfasst mehrere seitliche Längsstreben 14, die in Produktionsrichtung R der Verpackungsmaschine 1 ausgerichtet sind, sowie mehrere Querstreben 15, die die Längsstreben 14 miteinander verbinden. An jeder Arbeitsstation 2, 3, 4 der Verpackungsmaschine 1 weist der Rahmen 13 zwei parallel zueinander ausgerichtete und in gleicher Höhe befindliche Längsstreben 14 auf. Diese Längsstreben 14 erstrecken sich mindestens über die Länge einer Arbeitsstation 2, 3, 4 in der Produktionsrichtung R.

Mittig zwischen den Längsstreben 14 befindet sich eine ebenfalls in Produktionsrichtung R der Tiefziehverpackungsmaschine 1 ausgerichtete Welle 16. Die Welle 16 ist mit einem Antrieb verbunden, beispielsweise einem Elektromotor, vorzugsweise einem Servomotor. Im vorliegenden Ausführungsbeispiel kann die Welle 16 durch den Antrieb alternierend in unterschiedliche Rotationsrichtungen angetrieben werden.

Figur 1 zeigt die Tiefzieherpackungsmaschine in einem Zustand, in dem die Werkzeuge 6, 7, 8, 9 der jeweiligen Arbeitsstationen 2, 3, 4 geöffnet sind, um einen Weitertransport des bahnförmigen Materials 5 zu erlauben.

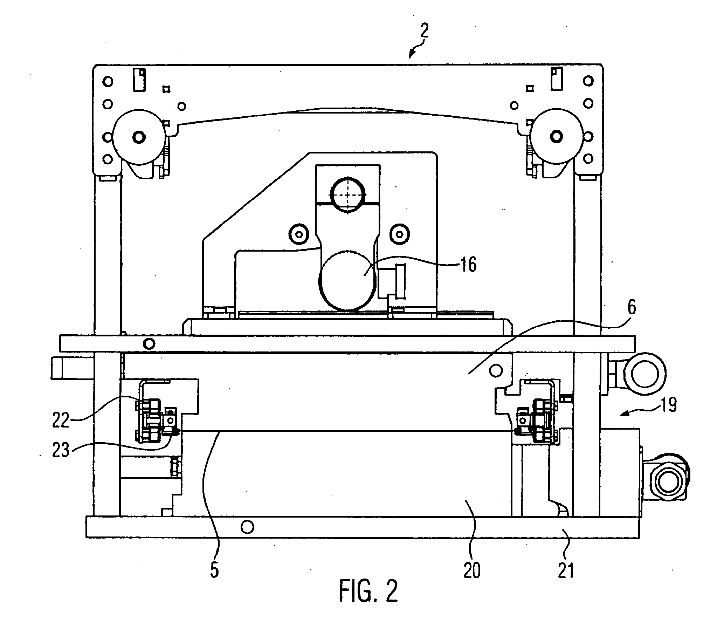

Figur 2 zeigt die Formstation 2 in Produktionsrichtung R mit einer erfindungsgemäßen Werkzeugwechseleinrichtung 19, umfassend das Formwerkzeug 6 und einem unterhalb des bahnförmigen Materials 5 angeordneten Werkzeugeinschub 20, der an dem Werkzeugträger 21 geführt ist bzw. gehalten wird. Eine Kettenführung 22 führt beidseitig je eine Klammer- bzw. Transportkette 23, die das bahnförmige Material entlang der Produktionsrichtung R durch die Arbeitsstationen intermittierend transportiert. Die Formstation ist in dieser Figur 2 in einer geschlossenen Stellung dargestellt, wobei sich die Welle 16 hierbei in einer unteren Stellung befindet.

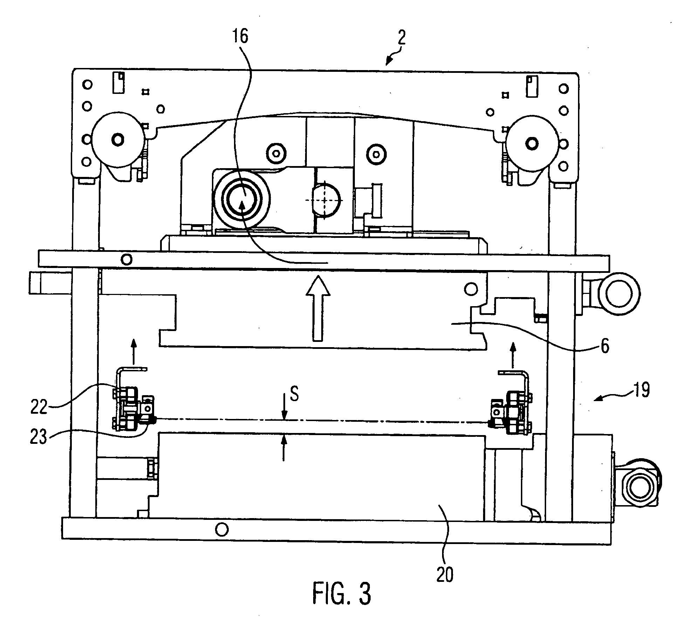

In Figur 3 ist die Formstation 2 in einer geöffneten Stellung gezeigt, bei über die Drehung der Welle 16 das Formwerkzeug 6 angehoben ist. Die Kettenführung 22 mit der Transportkette 23 und dem gehaltenen bahnförmigen Material 5 ist um eine Strecke s angehoben. Diese Bewegung kann über eine nicht dargestellte Mechanik in Verbindung mit dem Formwerkzeug 6 ausgeführt sein oder durch einen eigenen Antrieb, beispielsweise einem Pneumatikzylinder oder einem Servomotor, realisiert sein. Die Strecke s entspricht der Länge, die notwendig ist, dass sich die dem Werkzeugeinschub 20 zugewandten Seite der Kettenführung 22 oberhalb des oberen Bereichs des Werkzeugeinschubs 20 befindet.

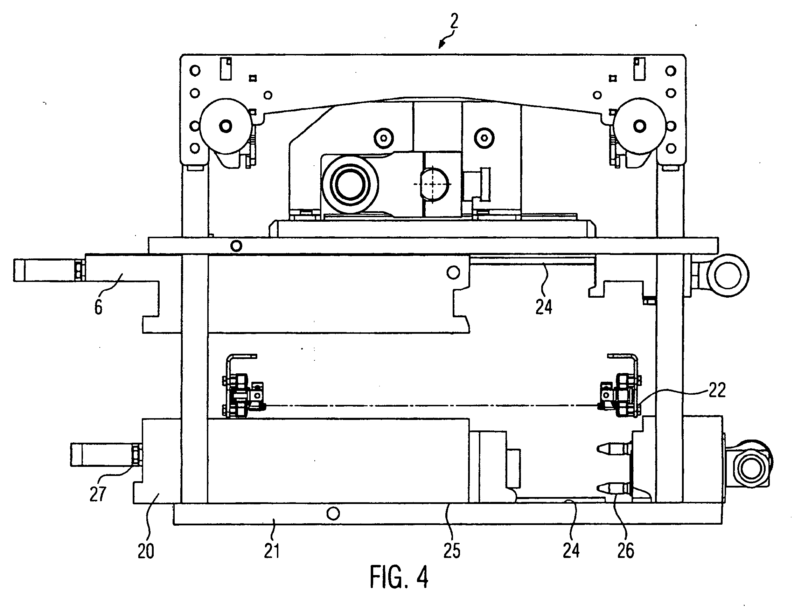

In Figur 4 ist wie in Figur 3 die Formstation 2 in geöffneter Stellung dargestellt. Dabei sind der Werkzeugeinschub 20 und das Formwerkzeug 6 seitlich nach links aus der Formstation 2 bzw. aus der Tiefziehverpackungsmaschine 1 teilweise herausgezogen. Führungen 24 führen den Werkzeugeinschub 20 und das Formwerkzeug 6 während der seitlichen Bewegung und solange sich ein Teil der Werkzeuge 20, 6 noch in der Formstation 2 bzw. in den Führungen 24 befinden. Der Werkzeugeinschub 20 bewegt sich mit geringem Abstand unterhalb der linken Kettenführung 22 seitlich nach außen. Der Werkzeugträger 21 ist als Kühlplatte mit einem nicht dargestellten Wasserkreislauf ausgeführt und befindet sich in der Ebene 25 in einem flächigen Kontakt mit dem Werkzeugeinschub 20. Zur Fixierung und zum Anschluss von Elektrik, beispielsweise zum Ansteuern von Heizstäben in einer Heizplatte 20 zum Erwärmen des bahnförmigen Materials 5, und Sensorik, beispielsweise zum Auswerten von Temperatursensoren in einer Heizplatte 20, sind Fixierelemente 26 an der Anschlagseite rechts an bzw. oberhalb des Werkzeugträgers angebracht. Über eine Klemmvorrichtung 27 wird der Werkzeugeinschub 20 auf dem Werkzeugträger 21 in einer Arbeitsposition gesichert bzw. befestigt.

Auch wenn beidseitig des bahnförmigen Materials 5 eine Kettenführung 22 vorgesehen ist, genügt es, wenn für den Werkzeugwechsel nur eine der beiden Kettenführungen 22 in der beschriebenen Weise vertikal anhebbar ist, vorzugsweise diejenige Kettenführung, zu der der Werkzeugeinschub 20 entnommen werden soll. Insbesondere um Spannungen in der Verpackungsfolie zu verringern, wäre es alternativ möglich, die Kettenführungen 22 auf beiden Seiten der Verpackungsfolie vertikal bewegen zu können, wobei diese Bewegungen wiederum aneinander gekoppelt oder getrennt voneinander stattfinden können.

## Patentansprüche

1. Werkzeugwechseleinrichtung (19) für eine Arbeitsstation (2, 3) einer Tiefziehverpackungsmaschine (1), mit einem Werkzeugeinschub (20) und einer Kettenführung (22) zum Transportieren eines bahnförmigen Materials (5) durch die Arbeitsstation (2, 3), **dadurch gekennzeichnet, dass** die Kettenführung (22) relativ zum Werkzeugeinschub (20) vertikal bewegbar ist, um den Werkzeugeinschub (20) seitlich gegenüber der Produktionsrichtung (R) verschieben zu können.

2. Werkzeugwechseleinrichtung nach Anspruch 1, **dadurch gekennzeichnet, dass** die Kettenführung (22) relativ zum Werkzeugeinschub (20) in eine Wechselposition und in eine Arbeitsposition bewegbar ist.

3. Werkzeugwechseleinrichtung nach einem der vorangehenden Ansprüche, **dadurch gekennzeichnet, dass** die Kettenführung (22) in ihrer Bewegung an ein Werkzeugoberteil (6) oder ein Werkzeugunterteil (8) gekoppelt ist.

4. Werkzeugwechseleinrichtung nach einem der Ansprüche 1 oder 2, **dadurch gekennzeichnet, dass** die Kettenführung (22) mittels wenigstens eines Aktuators, vorzugsweise eines Pneumatikzylinders oder eines Servomotors, bewegbar ist.

5. Werkzeugwechseleinrichtung nach einem der vorangehenden Ansprüche, **dadurch gekennzeichnet, dass** der Werkzeugeinschub (20) eine Heizplatte oder eine Siegelplatte ist.

6. Werkzeugwechseleinrichtung nach einem der vorangehenden Ansprüche, **dadurch gekennzeichnet, dass** der Werkzeugeinschub (20) mit einer Kühlplatte (21) der Formstation während des Betriebs der Formstation (2) in Kontakt steht.

7. Tiefziehverpackungsmaschine (1) mit einer Werkzeugwechseleinrichtung (19) nach einem der vorangehenden Ansprüche.

8. Verfahren zum Betrieb einer Werkzeugwechseleinrichtung (19) einer Arbeitsstation (2, 3) in einer Tiefziehverpackungsmaschine (1), wobei eine Kettenführung (22) zum Transportieren eines bahnförmigen Materials (5) durch die Arbeitsstation (2, 3) vorgesehen ist **dadurch gekennzeichnet, dass** die Kettenführung (22) wenigstens im Bereich der Arbeitsstation (2, 3) relativ zu einem Werkzeugeinschub (20) in eine Wechselposition vertikal bewegt wird, um den Werkzeugeinschub (20) gegenüber der Produktionsrichtung (R) seitlich zum Wechseln zu verschieben.

9. Verfahren nach Anspruch 8, **dadurch gekennzeichnet, dass** die Bewegung der Kettenführung (22) in die Wechselposition mit oder nach einem Öffnen der jeweiligen Arbeitsstation (2, 3) erfolgt, wobei beim Öffnen der Arbeitsstation ein Werkzeug, das sich an der einem Produkt abgewandten Seite des bahnförmigen Materials (5) befindet, relativ vom Werkzeugeinschub (20), der sich auf der einem Produkt zugewandten Seite des bahnförmigen Materials (5) befindet, wegbewegt wird.

10. Verfahren nach einem der Ansprüche 8 oder 9, **dadurch gekennzeichnet, dass** die Bewegung der Kettenführung (22) in die Arbeitsposition vor oder mit dem Schließen der jeweiligen Arbeitsstation (2, 3) erfolgt, wobei beim Schließen der Arbeitsstation ein Werkzeug, das sich an der einem Produkt abgewandten Seite des bahnförmigen Materials (5) befindet, relativ zum Werkzeugeinschub (20), der sich auf der einem Produkt zugewandten Seite des bahnförmigen Materials (5) befindet, hinbewegt wird.

11. Verfahren nach einem der vorangehenden Ansprüche 8 bis 10, **dadurch gekennzeichnet, dass** die Kettenführung (22) durch ein Werkzeugoberteil oder ein Werkzeugunterteil der jeweiligen Arbeitsstation bewegt wird.

12. Verfahren nach einem der vorangehenden Ansprüche 8 bis 10, **dadurch gekennzeichnet, dass** die Bewegung der Kettenführung mittels eines Aktuators, vorzugsweise eines Pneumatikzylinders oder eines Servomotors, ausgeführt wird.

13. Verfahren nach einem der vorangehenden Ansprüche 8 bis 12, **dadurch gekennzeichnet, dass** die Bewegung der Kettenführung (22) erfolgt, während das bahnförmige Material (5) stillsteht.

14. Verfahren nach einem der Ansprüche 8 bis 13, **dadurch gekennzeichnet, dass** der Werkzeugeinschub (20) mittels einer Kühlplatte (21) der Formstation (2) indirekt gekühlt wird.

15. Verfahren nach einem der Ansprüche 8 bis 14, **dadurch gekennzeichnet, dass** Energieleitungen zwischen dem Werkzeugeinschub und dem Werkzeugträger mittels Steckverbindungen automatisch beim Herausziehen des Werkzeugeinschubs (20) gelöst und beim Einschieben des Werkzeugeinschubs (20) verbunden werden.

16. Verfahren nach einem der Ansprüche 8 bis 15, **dadurch gekennzeichnet, dass** der Werkzeugeinschub (20) automatisch zum Herausnehmen aus der Arbeitsstation (2, 3) entriegelt und/oder automatisch nach dem Einschieben in die Arbeitsstation (2, 3) verriegelt wird.

## Claims

1. A tool changing device (19) for a work station (2, 3) of a thermoform packaging machine (1), comprising a work insert (20) and a chain guide (22) for conveying a web-shaped material (5) through the work station (2, 3), **characterized in that** the chain guide (22) is vertically movable relative to the tool insert (20) so that the tool insert (20) can be displaced laterally relative to the production direction (R).

2. A tool changing device according to claim 1, **characterized in that** the chain guide (22) is movable relative to the tool insert (20) to a changing position and to a working position.

3. A tool changing device according to one of the preceding claims, **characterized in that** the movement of the chain guide (22) is coupled to a tool upper part (6) or to a tool lower part (8).

4. A tool changing device according to one of the preceding claims, **characterized in that** the chain guide (22) is movable by means of at least one actuator, preferably a pneumatic cylinder or a servo motor.

5. A tool changing device according to one of the preceding claims, **characterized in that** the tool insert (20) is a heating plate or a sealing plate.

6. A tool changing device according to one of the preceding claims, **characterized in that** the tool insert (20) is in contact with a cooling plate (21) of the forming station, when said forming station (2) is in operation.

7. A thermoform packaging machine (1) comprising a tool changing device (19) according to one of the preceding claims.

8. A method of operating a tool changing device (19) of a work station (2, 3) in a thermoform packaging machine (1), wherein a chain guide (22) is provided for conveying a web-shaped material (5) through the work station (2, 3), **characterized in that** the chain guide (22) is, at least in the area of the work station (2, 3), moved vertically relative to a tool insert (20) to a changing position so as to laterally displace the tool insert (20) relative to the production direction (R) for the purpose of changing.

9. A method according to claim 8, **characterized in that** the movement of the chain guide (22) to the changing position takes place simultaneously with or after opening of the respective work station (2, 3), wherein, during opening of the work station, a tool which is positioned on the side of the web-shaped material (5) facing away from a product is moved relative to and away from the tool insert (20), which is positioned on the side of the web-shaped material (5) facing a product.

10. A method according to one of the claims 8 or 9, **characterized in that** the movement of the chain guide (22) to the working position takes place before or simultaneously with the closing of the respective work station (2, 3), wherein, during closing of the work station, a tool which is positioned on the side of the web-shaped material (5) facing away from a product is moved relative to and towards the tool insert (20), which is positioned on the side of the web-shaped material (5) facing a product.

11. A method according to one of the preceding claims 8 to 10, **characterized in that** the chain guide (22) is moved by a tool upper part or a tool lower part of the respective work station.

12. A method according to one of the preceding claims 8 to 10, **characterized in that** the movement of the chain guide is executed by means of an actuator, preferably a pneumatic cylinder or a servo motor.

13. A method according to one of the preceding claims 8 to 12, **characterized in that** the movement of the chain guide (22) takes place while the web-shaped material (5) is standing still.

14. A method according to one of the claims 8 to 13, **characterized in that** the tool insert (20) is cooled indirectly by means of a cooling plate (21) of the forming station (2).

15. A method according to one of the claims 8 to 14, **characterized in that** the power lines between the tool insert and the tool carrier are, by means of plug connections, automatically disconnected when the tool insert (20) is being pulled out, and automatically connected when the tool insert (20) is being pushed in.

16. A method according to one of the claims 8 to 15, **characterized in that** the tool insert (20) is automatically unlocked for removal from the work station (2, 3) and/or automatically locked after insertion in the work station (2, 3).

## Revendications

1. Dispositif de changement d'outil (19) pour une station de travail (2, 3) d'une machine d'emballage à emboutissage (1), comportant un insert d'outil (20) et un guidage de chaîne (22) pour transporter un matériau en forme de bande (5) à travers la station de travail (2, 3), **caractérisé en ce que** le guidage de chaîne (22) peut être déplacé verticalement par rapport à l'insert d'outil (20) afin de pouvoir décaler l'insert d'outil (20) latéralement par rapport à la direction de production (R).

2. Dispositif de changement d'outil selon la revendication 1, **caractérisé en ce que** le guidage de chaîne (22) peut être déplacé par rapport à l'insert d'outil (20) dans une position d'échange et une position de travail.

3. Dispositif de changement d'outil selon l'une des revendications précédentes, **caractérisé en ce que** le guidage de chaîne (22) est accouplé lors de son déplacement à une partie supérieure de l'outil (6) ou à une partie inférieure de l'outil (8).

4. Dispositif de changement d'outil selon l'une des revendications 1 ou 2, **caractérisé en ce que** le guidage de chaîne (22) peut être déplacé à l'aide d'au moins un actionneur, préférablement un vérin pneumatique ou un servomoteur.

5. Dispositif de changement d'outil selon l'une des revendications précédentes, **caractérisé en ce que** l'insert d'outil (20) est une plaque chauffante ou une plaque de scellage.

6. Dispositif de changement d'outil selon l'une des revendications précédentes, **caractérisé en ce que** l'insert d'outil (20) est en contact avec une plaque de refroidissement (21) de la station de formage pendant le fonctionnement de la station de formage (2).

7. Machine d'emballage à emboutissage (1) avec un dispositif de changement d'outil (19) selon l'une des revendications précédentes.

8. Procédé pour l'utilisation d'un dispositif de changement d'outil (19) d'une station de travail (2, 3) dans une machine d'emballage à emboutissage (1), dans lequel un guidage de chaîne (22) est pourvu pour transporter un matériau en forme de bande (5) à travers la station de travail (2, 3), **caractérisé en ce que** le guidage de chaîne (22) est déplacé verticalement au moins dans la plage de la station de travail (2, 3) par rapport à un insert d'outil (20) dans une position d'échange afin de décaler l'insert d'outil (20) latéralement par rapport à la direction de production (R) pour l'échange.

9. Procédé selon la revendication 8, **caractérisé en ce que** le déplacement du guidage de chaîne (22) dans la position d'échange se produit pendant ou après une ouverture de la station de travail respective (2, 3), moyennant quoi, lors de l'ouverture de la station de travail, un outil qui se trouve du côté du matériau en forme de bande (5) opposé à un produit est éloigné par rapport à l'insert d'outil (20) qui se trouve du côté du matériau en forme de bande (5) faisant face à un produit.

10. Procédé selon l'une des revendications 8 ou 9, **caractérisé en ce que** le déplacement du guidage de chaîne (22) dans la position de travail se produit avant ou pendant la fermeture de la station de travail respective (2, 3), moyennant quoi, lors de la fermeture de la station de travail, un outil qui se trouve du côté du matériau en forme de bande (5) opposé à un produit est rapproché par rapport à l'insert d'outil (20) qui se trouve du côté du matériau en forme de bande (5) faisant face à un produit.

11. Procédé selon l'une des revendications 8 à 10 qui précèdent, **caractérisé en ce que** le guidage de chaîne (22) est déplacé par une partie supérieure de l'outil ou une partie inférieure de l'outil de la station de travail respective.

12. Procédé selon l'une des revendications 8 à 10 qui précèdent, **caractérisé en ce que** le déplacement du guidage de chaîne est mis en oeuvre à l'aide d'un actionneur, préférablement un vérin pneumatique ou un servomoteur.

13. Procédé selon l'une des revendications 8 à 12 qui précèdent, **caractérisé en ce que** le déplacement du guidage de chaîne (22) se produit pendant que le matériau en forme de bande (5) est à l'arrêt.

14. Procédé selon l'une des revendications 8 à 13, **caractérisé en ce que** l'insert d'outil (20) est refroidi indirectement à l'aide d'une plaque de refroidissement (21) de la station de formage (2).

15. Procédé selon l'une des revendications 8 à 14, **caractérisé en ce que** des lignes d'alimentation entre l'insert d'outil et le porte-outil sont automatiquement déconnectées à l'aide de prises de connexion lors de l'extraction de l'insert d'outil (20) et sont de même connectées lors de l'insertion de l'insert d'outil (20).

16. Procédé selon l'une des revendications 8 à 15, **caractérisé en ce que** l'insert d'outil (20) est automatiquement déverrouillé pour l'extraction de la station de travail (2, 3) et/ou automatiquement verrouillé après l'insertion dans la station de travail (2, 3).
